# EUROPEAN PATENT APPLICATION

(11) **EP 4 516 844 A1**
(43) Date of publication of application: **05.03.2025**
(21) Application number: 23194492.7
(22) Date of filing: 31.08.2023
(51) Int. Cl.: C08J 5/22, H01M 8/1081, C08L 81/06, H01M 8/1069

(54) **METHODS OF PRODUCING NON-POROUS COMPOSITE ION EXCHANGE MEMBRANES FOR WATER ELECTROLYSIS AND RESULTING DEVICES FROM THE SAME**

(71) Applicant: VITO NV, 2400 Mol (BE)
(72) Inventor: NAHRA, Fady, 2400 Mol (BE); TSEHAYE, Misgina Tilahun, 2400 Mol (BE); RAMASAMY, Deepika, 2400 Mol (BE); MOLENBERGHS, Bart, 2400 Mol (BE); DE SCHEPPER, Wim, 2400 Mol (BE); VAES, Jan, 2400 Mol (BE)
(74) Representative: Arnold & Siedsma

(57) **Abstract**

The present invention is related to a composite ion-exchange membrane and to a method of manufacturing said membrane. In particular, the non-porous ion-exchange membrane integrates an ion conductive polymer for application in alkaline water electrolysis application.

## Description

### Technical field

The present invention is related to a composite ion-exchange membrane and to a method of manufacturing said membrane. In particular, the non-porous ion-exchange membrane integrates an ion conductive polymer for application in alkaline water electrolysis application.

### Background art

Green hydrogen is anticipated to significantly contribute in replacing fossil fuels in hard-to-decarbonise industries, such as steel, cement, chemicals and shipping sectors. This requires large amount of affordable renewable energy sources and efficient water electrolysis technologies.

Alkaline water electrolysis, which uses aqueous KOH as the electrolyte, is a well-known process for producing hydrogen through water splitting using electrical energy. Interestingly, renewable energy, such as wind and solar can be used as energy sources, thus producing a green hydrogen.

In alkaline water electrolysis, when current is applied, water is split/reduced to form hydrogen gas and hydroxide ion (OH⁻) at the cathode (negative electrode). The released OH⁻ ion is then transported to the anode (positive electrode) through the membrane (traditionally known as separator or diaphragm) and oxidized to oxygen and water.

At the core of a zero-gap alkaline water electrolyzer is a membrane, separating the two electrodes. The membrane allows charge-carrying ions to pass through and prevents gas cross-contamination and electronic current flow. Therefore, the membrane should exhibit high chemical stability, ionic conductivity, mechanical strength and low/no gas crossover.

The membrane used can be polymeric, ceramic or composite based on its composition nature. Based on its ion transport mechanism, it can also be further classified into porous or dense type. Among them, mainly, three types of membranes, namely porous membranes, anion-exchange membranes and ion-solvating membranes are used in alkaline water electrolysis (https://iopscience.iop.org/article/10.1149/1945-7111/abda57).

Porous composite membranes with predominance of ceramic materials component that offer sufficient alkaline stability are commonly used in alkaline water electrolysis. A polymer is added as a binder substance. Nowadays, commercially available porous composite Zirfon^{™} Perl UTP 500 (Agfa-Gevaert N.V.) membrane is widely used in alkaline water electrolysis (10.1149/1945-7111/abda57). WO2009/147084 and WO2009/147086 (Agfa Gevaert and VITO) disclose manufacturing methods to produce porous membranes with mechanical support.

Generally speaking, porous composite membranes exhibit higher gases crossover than dense membranes, particularly at low current densities and high operating pressures, which is associated to an increased risk of explosion and the loss of produced hydrogen gases.

One method followed to reduce the hydrogen gas crossover in such membranes is to increase the thickness of such membranes, which is effective in reducing gas crossover but results in increased membrane electrical resistance and cell overpotential.

Anion exchange membranes (AEMs), on the other hand, are composed of a polymer backbone and a cation molecule. The polymer backbone provides mechanical support, whereas the fixed ionic function provides ionic conduction. As a result, its properties (such as water uptake, swelling degree, ionic conductivity and selectivity) is determined by the amount and distribution of the fixed ionic groups.

AEMs, which are typically dense, have lower gas permeability, making them promising candidates for use in alkaline water electrolysis. Despite recent advances in AEM, optimized and a long-lasting AEM for alkaline water electrolysis has yet to be developed (https://doi.org/10.1115/1.4047963). The main issue with such membranes is their low alkaline stability, which is caused by OH- ion attack on the cation, polymer backbone or spacer between them.

Thus, there is still a need in the art for membrane that at least partially addresses some of the aforementioned issues. In particular, there is a need for high-performing AEM with high chemical stability for use in alkaline water electrolysis.

Thus, it would be desirable to prepare flexible and non-porous ceramic-based AEMs, incorporating the advantages of the two membrane types, fulfilling the strict requirements mentioned above, including no gas crossover, high ionic conductivity, chemical and mechanical stability.

However, preparing such material is not straightforward because simple non-solvent phase inversion methods produce porous membranes while slurry/solution preparation, casting, and solvent evaporation at high temperatures produce dense membranes.

Therefore, it would be desirable to develop a method for preparing non-porous composite ion-exchange membranes by first preparing a porous composite ion exchange membrane, followed by systematic and controlled densification of the membrane.

### Summary of invention

According to a first aspect of the invention, there is therefore provided a method of preparing a non-porous polymeric-ceramic hybrid ion-exchange membrane, hereinafter also referred to as a non-porous composite ion-exchange membrane, as set out in the appended claims.

Said method of manufacturing such non-porous composite ion-exchange membrane as defined in the appended set of claims, comprises:
- combining a ceramic material, a polymer binder, an ionomer and a solvent to create a (slurry) mixture;
- casting the mixture on a surface to obtain a casted composite ionic dope material with a first thickness;
- subjecting the said casted composite ionic dope material to phase inversion with at least one non-solvent to form a casted porous composite ionic material with a second thickness; and
- pressing and/or calendaring the casted porous composite ionic material to obtain a non-porous composite ion-exchange membrane with a third thickness smaller than the second thickness.

In an embodiment, in particular for use of the non-porous composite (ion-exchange) membranes in a high alkaline environment, such as 6 M KOH, the mixture in the first step doesn't need to comprise an ionomer, or it can be present at very low concentrations of up to about 5 wt% of the mixture.

In an embodiment according to the method of the invention, the ceramic material is selected from zirconium oxide (ZrO₂), titanium dioxide (TiO₂), alumina (Al₂O₃), yttria fully stabilized zirconia (Y₂O₃-doped ZrO₂ (YSZ)), yttria (tetragonal zirconia polycrystal (Y₂O₃-doped ZrO₂ (Y-TZP)), CeO₂, CeO₂ tetragonal ZrO₂ polycrystal (Ce-TZP), SiO₂, SnO₂, and the like or combinations thereof; in particular the ceramic material is selected from zirconium dioxide (ZrO₂), titanium dioxide (TiO₂), yttria fully stabilized zirconia (Y₂O₃-doped ZrO₂ (YSZ)), yttria (tetragonal zirconia polycrystal (Y₂O₃-doped ZrO₂ (Y-TZP)), tetragonal ZrO₂, or combinations thereof;

In an embodiment the ceramic material used to create the slurry mixture is a powder, such as a nano- or micron powder or combinations thereof. As used herein a nanopowder is a fine powder composed of particles ranging from 50nm to 300nm in diameter. As used herein a micron powder is a fine powder composed of particles ranging from 0.5 µm to 3 µm in diameter.

In an embodiment the polymer binder used to create the slurry mixture can be any polymeric binder typically used in the manufacture of composite materials such as but not restricted to polysulfone (PSU), polyethersulfone (PES/PESU), polyphenylene sulfone (PPSU), Poly(*p*-phenylene oxide) (PPO) (also known as poly(*p*-phenylene ether) (PPE)), Polyvinylidene difluoride (PVDF) and the like. In a particular embodiment the polymer binder is selected from polysulfone (PSU), polyethersulfone (PES/PESU), Poly(*p*-phenylene oxide) (PPO), and Polyvinylidene difluoride (PVDF). In a more particular embodiment the polymer binder is polysulfone (PSU).

In an embodiment the ionic conductive polymer (ionomer) used to create the slurry mixture is selected from the Anion Exchange Ionomers (AEls) or the Cation Exchange Ionomers (CEIs) typically used in the manufacture of membrane separators in electrochemical cells. Examples of current state-of-the-art AEls are the benzyltrimethylammonium-functionalized poly(ethylene-co-tetrafluoroethylene) (BTMA-ETFE) ionomers, polyfluorene (FLN) ionomers, Poly(terphenyl piperidinium) (PTP) ionomers, poly(biphenyl piperidinium) (PBP) ionomers. Examples of cations used in AEMs are ammonium cations, imidazolium cations, phosphonium cations, sulphonium cations, guanidinium cations, pyridinium cations and Ligand-metal complexes. Examples of a current state-of-the-art CEls is Perfluorosulfonic-acid (PFSA).

In an embodiment the solvent is a solvent appropriate in the manufacture of a non-porous composite ion-exchange membrane using any one of the aforementioned polymeric binders. In a particular embodiment the solvent is an aprotic solvent or a mixture of two or more aprotic solvents. Preferred examples of aprotic solvents are polar aprotic solvents such as acetone, dimethylformamide (DMF), dimethylsulfoxide (DMSO) or N-Methyl-2-pyrrolidone (NMP), the latter being most preferred.

In an embodiment the non-solvent is a non-solvent appropriate in the manufacture of a non-porous composite ion-exchange membrane using any one of the aforementioned polymeric binders. In a particular embodiment the non-solvent is water or a non-solvent composition of an aprotic solvent, in particular NMP, in water, wherein the vol% ratio of water to aprotic solvent ranges from 100/0 to 10/90; in particular from 100/0 to 15/85.

In an embodiment of the method according to the invention, the slurry mixture of a ceramic material, a polymer binder, an ionomer and a solvent, comprises the ionomer in a range of up to about 20 wt% of the total mixture; in particular in a range of about 1 wt% to about 15 wt% of the total mixture; more in particular in a range of about 3 wt% to about 15 wt% of the total mixture.

In an embodiment of the method according to the invention, the slurry mixture of a ceramic material, a polymer binder, an ionomer and a solvent, comprises the ceramic material in a range of about 20 wt% to about 40 wt% of the total mixture; in particular in a range from about 23 wt% to about 35 wt% of the total mixture.

In an embodiment of the method according to the invention, the slurry mixture of a ceramic material, a polymer binder, an ionomer and a solvent, comprises the polymeric binder in a range of about 1 wt% to about 20 wt% of the total mixture; in particular in range of about 3 wt% to about 15 wt% of the total mixture; more in particular in a range from about 5 wt% to about 15 wt% of the total mixture.

In an embodiment of the method, the step of subjecting the casted composite ionic dope material to phase inversion or phase separation, generally consists of such process as commonly exploited in the manufacture of porous materials. It is generally performed by removing the solvent from a liquid-polymer solution, leaving a porous, solid membrane. Phase inversion can be carried out through one of four typical methods: - Reducing the temperature of the solution. - Immersing the polymer solution into non-solvent. - Exposing the polymer solution to a vapor of non-solvent. - Evaporating the solvent in atmospheric air or at high temperature.

In the current application best results were obtained by immersing the casted composite ionic dope material into a coagulation bath comprised of at least one non-solvent. In the examples hereinafter this step of processing the casted composite ionic dope material using phase inversion by means of a non-solvent, is being referred to as Phase Inversion using a coagulation bath.

In a particular embodiment the coagulation bath comprises water as a non-solvent or a non-solvent composition of an aprotic solvent in water, in particular NMP, in water, wherein the vol% ratio of water to aprotic solvent ranges from 100/0 to 10/90; in particular from 100/0 to 15/85.

In another embodiment the phase inversion is done by evaporating the solvent from the casted composite ionic dope material, in atmospheric air or at high temperature. In a particular embodiment at a higher temperature of at least 30°C, more in particular in a range of about 50°C to about 200°C. In said embodiments wherein the solvent is NMP, the phase inversion is performed at a temperature of about 50°C to about 170°C; in particular at a temperature of about 50°C to about 100°C; more in particular at a temperature of about 50°C to 70°c; even more particular at a temperature of about 50°C.

In an embodiment the step of processing the slurry mixture of a ceramic material, a polymer binder, an ionomer and a solvent, comprises the step of casting the slurry mixture to a first thickness of up to about 500 µm, in particular to a first thickness of up to about 400 µm prior to the phase inversion, to obtain the casted composite ionic dope material. Phase inversion of said casted composite ionic dope material provides a casted porous composite ionic material.

In an embodiment of the method according to the invention, the casted porous composite ionic material has a second thickness between 60 µm and 450 µm; in particular a second thickness between 70 µm and 350 µm.

In an embodiment of the method according to the invention, the aforementioned casted porous composite ionic material is pressed in a final step to obtain a non-porous composite ion-exchange membrane according to the invention.

In an embodiment of the method according to the invention the casted porous composite ionic material is pressed to a final (third) thickness of between and about 50 - 250 µm; in particular to a final (third) thickness of between and about 50 - 180 µm. In this final step of mechanically compressing the porous composite material, pressure ranging from 100 bar to 760 bar can be applied.

In an embodiment of the method according to the invention the pressing can be performed either via hydraulic static press or via calendar rolls with off-set compressing.

According to a second aspect the present invention provides a non-porous composite ion-exchange membrane, characterized in consisting of a compressed porous composite material comprising an ionomer. Different from currently existing membrane separators, the non-porous composite ion-exchange membrane of the present invention is a self-standing membrane that does not need a mechanical support, such as the plastic open mesh materials, for example made from a polyphenylene sulfide fabric, typically found in the manufacture of an electrochemical membrane separator.

In an embodiment of the non-porous composite ion-exchange membrane according to the invention, the casted porous composite ionic material is composed of a ceramic material, a polymeric binder and an ionomer; wherein the ceramic material is present in a range of about 50 wt% to about 80 wt%, the polymeric binder is present in a range of about 10 wt% to about 40 wt%, and the ionomer is present in a range of about 1 wt% to about 40 wt% of the casted porous composite ionic material. In a particular embodiment and per reference to the examples hereinafter, the casted porous composite ionic material is composed of a ceramic material, a polymeric binder and an ionomer; wherein the ceramic material is present in a range of about 60 wt% to about 80 wt%, the polymeric binder is present in a range of about 15 wt% to about 30 wt% (more in particular in a range of about 18 wt% to about 25 wt%), and the ionomer is present in a range of about 5 wt% to about 15 wt% (more in particular in a range of about 8 wt% to about 12 wt%) of the casted porous composite ionic material.

In an embodiment of the non-porous composite ion-exchange membrane according to the invention, the ceramic material is selected from zirconium oxide (ZrO₂), titanium dioxide (TiO₂), alumina (Al₂O₃), yttria fully stabilized zirconia (Y₂O₃-doped ZrO₂ (YSZ)), yttria (tetragonal zirconia polycrystal (Y₂O₃-doped ZrO₂ (Y-TZP)), CeO₂, CeO₂ tetragonal ZrO₂ polycrystal (Ce-TZP), SiO₂, SnO₂, and the like or combinations thereof; in particular the ceramic material is selected from zirconium dioxide (ZrO₂), titanium dioxide (TiO₂), yttria fully stabilized zirconia (Y₂O₃-doped ZrO₂ (YSZ)), yttria (tetragonal zirconia polycrystal (Y₂O₃-doped ZrO₂ (Y-TZP)), tetragonal ZrO₂, or combinations thereof; more in particular TiO₂, YSZ, ZrO₂, or combinations thereof.

In an embodiment of the non-porous composite ion-exchange membrane according to the invention, the ceramic material is a powder, such as a nanopowder composed of particles ranging from 50 nm to 300 nm in diameter, a micron powder composed of particles ranging from 0.5 µm to 3 µm in diameter, or combinations thereof. In a particular embodiment, the ceramic material is a mixture of a TiO₂ nanopowder with a ZrO₂ micron powder; more in particular in a 50:50 ratio.

In an embodiment of the non-porous composite ion-exchange membrane according to the invention, the polymer can be any polymeric binder typically used in the manufacture of porous composite materials such as but not restricted to polysulfone (PSU), polyethersulfone (PES/PESU), polyphenylene sulfone (PPSU), Poly(*p*-phenylene oxide) (PPO) (also known as poly(*p*-phenylene ether) (PPE)), Polyvinylidene difluoride (PVDF) and the like. In a particular embodiment the polymer binder is selected from polysulfone (PSU), polyethersulfone (PES/PESU), Poly(*p*-phenylene oxide) (PPO), and Polyvinylidene difluoride (PVDF). In a more particular embodiment the polymer binder is polysulfone (PSU).

In an embodiment of the non-porous composite ion-exchange membrane according to the invention, the ionomer is selected from an Anion Exchange Ionomers (AEls) or a Cation Exchange Ionomers (CEls); in particular an AEI. In a particular embodiment the ionomer is an AEI selected from benzyltrimethylammonium-functionalized poly(ethylene-co-tetrafluoroethylene) (BTMA-ETFE) ionomers, polyfluorene (FLN) ionomers, Poly(terphenyl piperidinium) (PTP) ionomers, poly(biphenyl piperidinium) (PBP) ionomers, imidazolium-containing ionomer, sulphonium-based ionomer and phosphonium-based ionomer.

In an embodiment of the non-porous composite ion-exchange membrane according to the invention the porous composite ceramic material is composed of a ceramic material selected from TiO₂ nanopowder (NP), ZrO₂ micron powder (MP) or 50:50 TiO₂ NP / ZrO₂ MP, the polymer binder polysulfone (PSU), and the ionomer AP2-HNN8 from Aemions^{™}. Within this embodiment the non-porous composite ion-exchange membrane comprises the ceramic material in a range of about 50 wt% to about 80 wt% (in particular in a range from about 60 wt% to about 80 wt%), the polymeric binder is present in a range of about 10 wt% to about 40 wt% (in particular in range of about 15 wt% to about 35 wt%; more in particular in a range from about 20 wt% to about 25 wt%), and the ionomer is present in a range of about 1 wt% to about 40 wt% (in particular in a range of about 5 wt% to about 15 wt%; more in particular in a range of about 8 wt% to about 12 wt%) of the composite ceramic material.

In a third aspect the present invention provides the use of the non-porous composite ion-exchange membrane as herein defined, or obtained according to the methods of the present invention, in electrochemical applications, such as a fuel-cell, battery, hydrogen peroxide production and water electrolysis, as well as membrane-based filtration and extraction applications.

Membranes with different degree of densification (and/or different pore size) can be obtained with method of the present invention. This is achieved on the one hand by casting the mixture of a ceramic material, a polymer binder, an ionomer and a solvent at a different thickness and on the other hand by compressing the porous composite ceramic material obtained by processing said mixture at different pressures of at least 100 bar, preferably at different pressures between 100 and 800 bar.

### Brief description of the figures

Various aspects of the invention will now be discussed in greater detail with reference to the appended drawings, with the same reference numerical illustrating the same attributes.
Figure 1 - Schematic representation of the manufacture method according to the invention.
Figure 2 - Column chart of thicknesses before and after pressing, respectively.
Figure 3 -Column chart comparing the area resistance (ohm.cm²) of M11 to M15 membranes in 1 and 6 M KOH at 30 ºC, respectively before and after pressing at 200 bar (P200) and/or at 760 bar (P760).
Figure 4 - Column chart comparing the area resistance (ohm.cm²)of M2 to M10 membranes in 0.1 and 1 M KOH at 30 ºC, respectively before and after pressing at 200 bar (P200) and/or at 760 bar (P760).
Figure 5 - Graph presenting the H₂ contamination in O₂ (HTO) levels of selected membranes in 13 cm² alkaline water electrolyzer in 1 M KOH at room temperature (25 ºC) using Ni electrodes.
Figure 6 - Graph presenting the current density vscell voltage (IV) curves of selected membranes in 13 cm² alkaline water electrolyzer in 1 M KOH at room temperature (25 ºC) using Ni electrodes.

### Description of embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may refer to any of the embodiments mentioned and thus includes combinations thereof. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been

As mentioned hereinbefore, it is an object of the present invention to provide a material, in particular a non-porous composite ion-exchange membrane consisting of ceramic material, polymer binder and an ionomer for, amongst others, application in alkaline water electrolysis application. As demonstrated in the examples hereinafter, using these materials, only a fraction of ionomers (up to 15 wt%) is required to achieve an ohmic resistance similar to membranes that are entirely prepared from an ion conductive polymer. It has also been found that for application in water electrolysis applications, gas crossover can be prevented using the materials obtained using the methods herein disclosed, and this without affecting anion conductivity.

To said extend the non-porous composite ion-exchange membrane comprises inclusion of the ionomer into the casting mixture used to prepare a casted porous composite ionic material, followed by a post-processing step simply consisting of pressing said porous composite ionic material into a non-porous composite ion-exchange membrane.

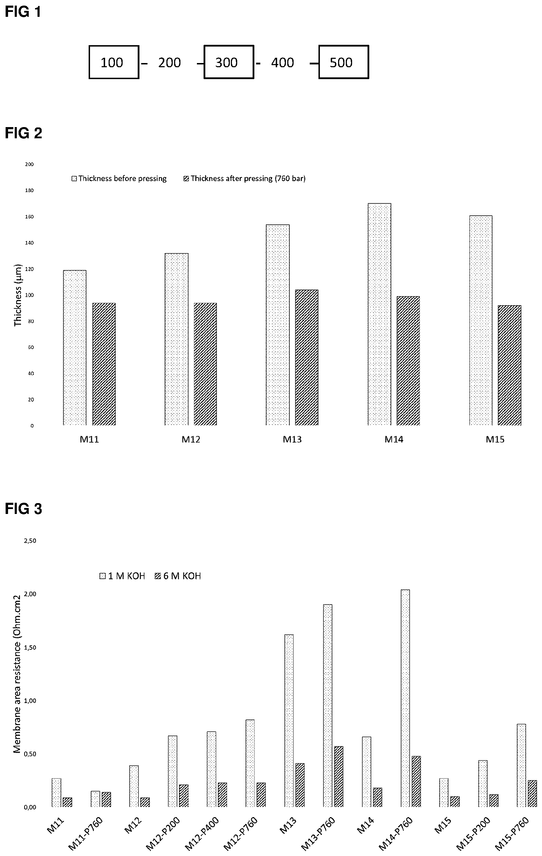

A schematic representation of the steps in the manufacture of the membranes according to the invention is provided in Figure 1, and is characterized that in the first step a slurry mixture (100) is prepared of the ceramic material with the polymer binder and the ionomer in an appropriate solvent.

In a subsequent step this mixture (100) is cast into a composite ionic dope material (200) with a first thickness preferably ranging from about 100 µm to about 500 µm, using for example a doctor blade casting process (See examples below). The casted composite ionic dope material is subsequently processed to obtain casted porous composite ionic material (300). Processing is preferably done using phase inversion, more in particular phase inversion by means of a non-solvent. The thus obtained material has a second thickness between 70 µm and 350 µm, but is not yet suitable as an electrochemical membrane separation in view of the porosity that doesn't prevent gases crossover.

In the final step densification of the pores is done by compressing (400) the casted porous composite ionic material (300) into a final third thickness of about 50 - 250 µm, thus obtaining the non-porous composite ion-exchange membrane (500) according to the invention.

While various embodiments for producing non-porous composite ion exchange membranes for water electrolysis and resulting devices from the same have been described herein, it is apparent that adaptations and modifications of these embodiments will occur to those skilled in the art. It is to be understood that such modifications and adaptations of the membranes as herein provided, including modifications into the phase inversion/pressing processing strategy, the ionomer, polymer binder, ceramic materials, material combinations and ratios, membrane dimensions, etc., are within the spirit and scope of the present disclosure.

With reference to example 5 hereinafter, according to an aspect of the present invention, it provides a method for producing non-porous composite ion exchange membranes according to the herein provided embodiments but characterized in that the (slurry) mixture of the ceramic material, polymeric binder, and solvent does not comprise an ionomer.

Even though such membranes lack an ionomer, when used in high alkaline concentrations, these membranes can still be used as membrane separators with no gas crossover, a sufficient ionic conductivity, and both chemical and mechanical stability. These embodiments wherein the (slurry) mixture lacks an ionomer underscore the effect of the final pressing step in the manufacture of the membranes as herein provided. These and other aspects of the invention will be apparent from the examples hereinafter.

### Examples

Examples 1-3 discuss the preparation of non-porous composite ion-exchange membranes that incorporate ionomers directly into the slurry mixture, whereas examples 4-5 discuss the preparation of the same membranes excluding any ionomers in order to compare and evaluate the influence of the added ionomers on ohmic resistance and conductivity. The goal is to directly obtain non-porous hydroxide exchange membranes (HEMs) that have very low gas and water permeability (close to 0), while still keeping a low ohmic resistance even at low pH.

### Non-porous composite ion-exchange membranes

Synthesis optimisation consisted of material screening and optimisation, polymer/ceramic/ionomer ratio, coagulation bath type, and pressing pressure.

### Example 1: Slurry mixture composition and preparation

The slurry mixture consisted of a polymer binder, a ceramic material and an ionic conductive polymer (ionomer). Several combinations were attempted using binders such as PVDF (polyvinylidene fluoride), PSU (polysulfone) and SEBS (Styrene-ethylene-butylene-styrene). PVDF and SEBS gave very hydrophobic supports and consequently were much less conductive. Therefore, PSU was chosen as optimal binder. Different ceramic mixtures were also attempted such as YSZ (Yttria-stabilized ZrO₂), TiO₂ and ZrO₂, as well as combinations of the latter three. Several solvents were investigated and NMP (N-Methyl-2-pyrrolidone) was chosen.

Following up on the previous optimization, modifications of the synthesis were performed in a way that integrates the ionomer directly into the casting mixture, yielding non-porous composite ion-exchange membranes with good ionic conductivity, very low permeability (of water and gas) without compromising overall conductivity.

The slurry mixture consisted of a polymer binder, a ceramic material and an ionomer (AP2-HNN6, Aemion^{™}, from ionomr innovations). A starting casting mixture ratio of 20:70:10 ratio (polymer binder/ceramic/ionomer) was used. The ratios were varied to investigate and optimise intrinsic conductivity and mechanical strength of the membranes.

The polymer binder, ceramic material and ionomer are mixed with the solvent till a homogenous slurry is formed using a magnetic stirrer (or mechanical stirrer) in a reaction flask.

In a typical example, ionomer (3.3 g) was dissolved in 30 mL NMP at 40-50 °C for 24 h. PSU (6.7 g) was then added and dissolved completely for 8 h at 40-50 °C. TiO₂ (23.32 g) was then added and mixed overnight. Depending on viscosity, additional NMP was added to make the slurry ready for casting. The slurry was then degassed under vacuum oven.

### Example 2. Preparation of casted porous composite ionic material

The first thickness, also referred to as the casting thickness, had to be optimized in a manner that allowed us to obtain thin (sub-100 µm) non-porous composite ion-exchange membranes after processing (phase inversion) and pressing. This first thickness was different for each ceramic material used.

Appropriate amount of slurry was poured onto a glass support. The slurry was knife-casted using casting knife gap of 400 or 300 µm.

The casted dope materials were then transferred to the respective coagulation bath.

The coagulation bath (in non-solvent phase inversion method) was investigated and optimized. As shown in Table 1, water or ratios of NMP/water have been used.

The membranes were immersed in the coagulation bath (water or NMP/water) for 30 min.

The membranes were then transferred to an excess RO water overnight,

In addition to non-solvent phase inversion method, solvent evaporation was also attempted to obtain these membranes using an oven at 50 °C to evaporate the NMP (Table 2, M1). However, this proved less efficient as it afforded highly dense supports with extremely low conductivity.

The prepared membranes were then transferred and immersed in hot water (80 °C) to remove remaining impurities (such as NMP) for 1 h. After drying a second thickness is measured

### Composition of selected casted porous composite ionic material.

**Table 1. Material composition and processing for composite ion-exchange material**

| Membrane | PSU (wt.%) | Ionomer (wt.%) | TiO₂ NP (wt.%) | Casting thickness (µm) | Coagulation bath | Thickness after phase inversion (µm) |
|---|---|---|---|---|---|---|
| M1 | 20 | 10 | 70 | 400 | No coagulation bath. | 74 |
| | | | | | Oven (50 °C, overnight) | |
| M2 | 20 | 10 | 70 | 400 | RO water | 157 |
| M3 | 20 | 10 | 70 | 400 | NMP/water (15/85) | 158 |
| M4 | 20 | 10 | 70 | 400 | NMP/water (10/90) | 161 |
| M5 | 20 | 10 | 70 | 300 | RO water | 117 |
| M6 | 20 | 10 | 70 | 300 | NMP/water (15/85) | 128 |
| M7 | 20 | 10 | 70 | 300 | NMP/water (10/90) | 112 |
| M8 | 23,5 | 11,5 | 65 | 400 | RO water | 145 |
| M9 | 23,5 | 11,5 | 65 | 300 | RO water | 100 |
| M10 | 23,5 | 11,5 | 65 | 300 | NMP/water (10/90) | 112 |

| | | | | | | |
|---|---|---|---|---|---|---|
| *wt.% is calculated with respect to the total weight of the slurry (without NMP). Thus, this is the final wt.% composition of the dry prepared membrane. The amount of NMP in the casting slurry is varied to get a homogenous slurry suitable for casting. | | | | | | |

### Example 3. Pressing the casted porous composite ionic material to obtain non-porous composite ion-exchange membranes

The membrane samples were pressed using a hydraulic press at different pressures (200, 400 and 760 bar) at room temperature to obtain supports with a third (final) thickness.

The membranes are named accordingly (Table 1). For instance, M1 membrane pressed at 100, 200, 400 or 760 bar is named M1-P100, M1-P200, M1-P400, M1-P760, respectively.

The hydraulic press (sample holder) accommodates 5x5 cm² or 10x10 cm² sample piece at a time. The amount of pressure to reduce the thickness, pore size and porosity depended on the nature of the slurry used.

Results of the different characterisations are provided in the characterisation section.

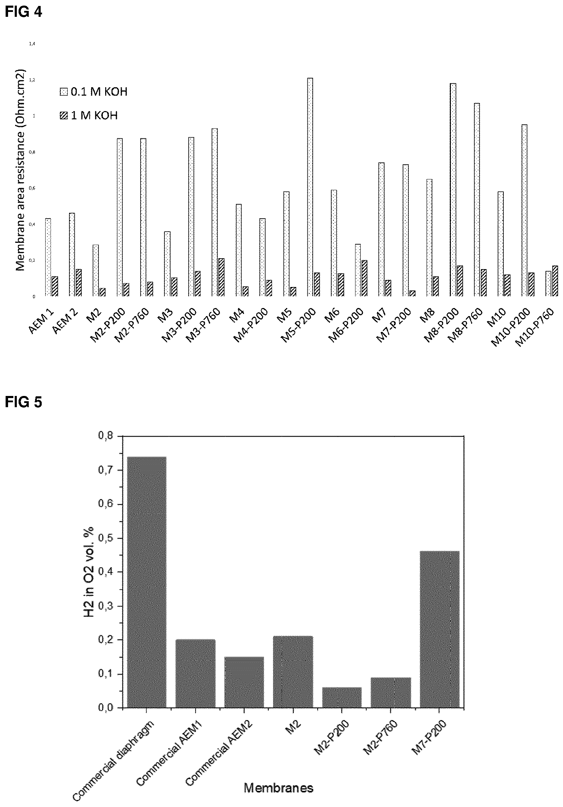

When comparing the HEMs from example 3 to dense non-porous commercial AEMs (50 µm thick), typically made by solvent evaporation, we find that our designed membranes have comparable to better ohmic resistance even at 0.1 M KOH and very similar low permeability (gas and water), while still being almost 2-3 times thicker (Figure 4). This in itself highlights the success of our strategy.

Besides the remarkable ohmic resistance using only a small amount of ionomer in a range of about 8 wt% to 12 wt%, in particular of about 10 wt.% of ionomer, the obtained membranes were all homogeneous, self-standing, flexible and very reproducible.

Another important feature for most of the synthesized membranes in the current invention is that they have a similar to lower hydrogen to oxygen (HTO) gas crossover compared to dense state-of-the-art commercial anion exchange membranes (AEMs) and a significantly lower gas crossover when compared to state-of-the-art commercial porous diaphragms/separators (Figure 5).

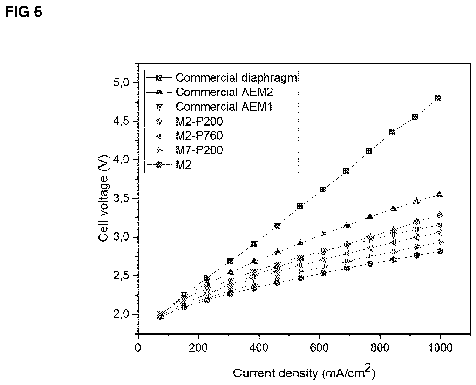

The performance of the prepared composite anion exchange membranes was evaluated in an alkaline water electrolysis setup using a 13 cm² cell. A selection of the tested membranes is shown in Figure 6. The IV curves show a significantly lower cell voltage at high current density for the herein reported membranes relative to the commercial AEMs, clearly highlighting their superior performance.

### Non-porous composite membranes

### Example 4. Preparation of casted porous composite material without ionomer

Optimising of several parameters, as discussed above, including to but no limited to, material screening and optimisation, polymer/ceramic ratio, casting thickness, processing and pressing was done.

Polymer/ceramic ratio ratios ranging from 100:0 to 20:80 (polymer/ceramic) showed that 30:70 was optimal. Lower ceramic ratios gave hydrophobic supports with low intrinsic conductivity and higher ceramic ratios did not yield self-standing supports.

Next, phase inversion was optimized. Using a coagulation bath of water/NMP (50:50) was found to provide self-standing supports with excellent intrinsic conductivity and a good first thickness.

**Table 2. Material composition and processing for composite material without ionomer**

| **Membrane** | **PSU (wt.%)** | **Inorganic particle type** | **Inorganic particle (wt.%)** | **Casting thickness (µm)** | **Coagulation bath** | **Porosity (%)** |
|---|---|---|---|---|---|---|
| M11 | 30 | ZrO₂ microparticle (MP) | 70 | 400 | NMP/water (50/50) | 58 |
| M12 | 30 | TiO₂ nanoparticle (NP) | 70 | 400 | NMP/water (50/50) | 51 |
| M13 | 30 | YSZ NP | 70 | 400 | NMP/water (50/50) | 63 |
| M14 | 30 | TiO₂ NP/YSZ NP | 70 | 400 | NMP/water (50/50) | 60 |
| M15 | 30 | TiO₂ NP/ZrO₂ NP | 70 | 400 | NMP/water (50/50) | 59 |

The obtained supports were all homogeneous, self-standing, flexible and very reproducible. With good calibration of the casting thickness, sub-100 µm non-porous supports could be consistently obtained after pressing.

The casted porous composite materials without ionomers are then pressed as before.

### Example 5. Pressing the casted porous composite materials to obtain non-porous composite membranes without ionomer

The pressing pressure, time and procedure is the same as discussed above. Porous composite materials were pressed using a hydraulic press at different pressures (200, 400 and 760 bar) to obtain supports with a third (final) thickness.

Pressing at increasing pressures (starting at 200 bar) correlates well to a clear reduction in open porosity. In the example of M12 (Table 5), when pressed at 760 bar (M12-P760), gas (air) flux becomes quite negligeable with a value of 0.14 L/min.cm² which is comparable to dense non-porous commercial AEM membranes (e.g., Fumatech FAA-3-50, Aemion+^{™}AF1-HNN8-50).

### Example 6: Membrane characterizations

The following characterizations were performed on both the pristine, and pressed membranes.

The prepared membranes were characterized in terms of thickness, water permeability, gas permeability and ionic conductivity before and after pressing. The final non-porous composite ion exchange membranes were characterized in term of gas crossover and cell polarization in alkaline water electrolyzer.

The performance of the prepared composite anion exchange membranes were tested in (13 cm² cell) alkaline water electrolysis using the following conditions.

**Table 3. Alkaline water electrolyzer test conditions**

| Parameter | Value/type |
|---|---|
| Catholyte | 1 M KOH |
| Anolyte | 1 M KOH |
| Current collector | Ni |
| Electrode | Commercial Ni mesh |
| Temperature | 25 °C |
| Cell pressure | Ambient |
| Flow rate | 730 mL/min |

### The thickness, water permeability and gas permeability of the non-porous composite ion-exchange membranes before and after pressing were measured. Gas-liquid porometry measurement was employed to determine gas permeability and bubble pressure. Selected membranes from the M1 to M10 series pressed at 200 and/or 760 bar are presented in Table 4.

**Table 4. Properties of some selected composite ion-exchange membranes (before and after pressing).**

| **Membrane** | **Final Thickness (µm)** | **Water permeability (L/(h.m².bar))** | **Gas permeability (in L/min.cm² at 5 bar)** |
|---|---|---|---|
| M1 | 74 | 0 | 0.17 |
| M1-P760 | 67 | 0 | 0.1 |
| M2 | 157 | 41.3 | 0.49 |
| M2-P200 | 96 | 21.7 | 0.21 |
| M2-P760 | 76 | 8.69 | 0.34 |
| M3 | 158 | 47.8 | 0.75 |
| M3-P200 | 98 | 32.6 | 0.08 |
| M3-P760 | 72 | 0 | 1.33 |
| M4 | 161 | 47.8 | 0.75 |
| M4-P200 | 108 | 32.6 | 0.08 |
| M5 | 117 | 47.8 | 0.56 |
| M5-P200 | 87 | 20 | 0.17 |
| M6 | 128 | 47.8 | 1.45 |
| M6-P200 | 90 | 21.73 | 0.34 |
| M7 | 112 | 60.9 | 1.89 |
| M7-P200 | 68 | 21.73 | 1.16 |
| M8 | 145 | 47.8 | 0.14 |
| M8-P200 | 75 | 17.39 | 0.31 |
| M8-P760 | 80 | 13.04 | 0.23 |
| M10 | 112 | 47.8 | 1.82 |
| M10-P200 | 65 | 21.73 | 6.29 |
| M10-P760 | 49 | 8.69 | 1.78 |

Ohmic resistance for the above selected membranes are shown in Figure 4

The thickness, water permeability and gas permeability of the non-porous composite membranes without ionomer were also measured before and after pressing. An example of M12 is given below. Thickness before and after pressing at 760 bar for all the membranes (M11 to M15) are given in Figure 2.

**Table 5. Properties of the M12 membrane after each pressing.**

| **Membrane** | **Thickness (µm)** | **Gas permeability (in L/min.cm² at 5 bar)** | **Water permeability (L/(h.m2.bar))** |
|---|---|---|---|
| M12 | 132 | 3.77 | 616 |
| M12-P200 | 112 | 0.63 | 155 |
| M12-P400 | 108 | 0.48 | 68 |
| M12-P760 | 94 | 0.14 | 28 |

Ohmic resistance for M11 to M15 (before and after pressing) are shown in Figure 3

## Claims

1. A method of manufacturing a non-porous composite ion-exchange membrane, said method comprising:
• combining a ceramic material, a polymeric binder, an ionomer and a solvent to create a slurry mixture;
• casting the slurry mixture on a surface to obtain a casted composite ionic dope material with a first thickness;
• subjecting the said casted composite ionic dope material to phase inversion with at least one non-solvent to form a casted porous composite ionic material with a second thickness;
• pressing and/or calendaring the casted porous composite ionic material to obtain a non-porous composite ion-exchange membrane with a third thickness smaller than the second thickness.

2. The method of claim 1, wherein the ceramic material is selected from zirconium oxide (ZrO₂), titanium dioxide (TiO₂), alumina (Al₂O₃), yttria fully stabilized zirconia (Y₂O₃-doped ZrO₂ (YSZ)), yttria (tetragonal zirconia polycrystal (Y₂O₃-doped ZrO₂ (Y-TZP)), CeO₂, CeO₂ tetragonal ZrO₂ polycrystal (Ce-TZP), SiO₂, SnO₂, and the like or combinations thereof; in particular the ceramic material is selected from zirconium dioxide (ZrO₂), titanium dioxide (TiO₂), yttria-stabilized zirconia (Y₂O₃-doped ZrO₂ (YSZ)), yttria (tetragonal zirconia polycrystal (Y₂O₃-doped ZrO₂ (Y-TZP)), tetragonal ZrO₂, or combinations thereof; more in particular TiO₂, ZrO₂, or a combinations thereof.

3. The method according to any one of the preceding claims, wherein the ceramic materials is a powder, such as a nano- or micron powder or combinations thereof.

4. The method according to claim 1, wherein the polymeric binder is selected from polysulfone (PSU), polyethersulfone (PES/PESU), polyphenylene sulfone (PPSU), Poly(*p*-phenylene oxide) (PPO) (also known as poly(*p*-phenylene ether) (PPE)), Polyvinylidene difluoride (PVDF) and the like; in a particular the polymer binder is selected from polysulfone (PSU), polyethersulfone (PES/PESU), Poly(*p*-phenylene oxide) (PPO), and Polyvinylidene difluoride (PVDF); more particular the polymer binder is polysulfone (PSU).

5. The method according to claim 1 wherein the ionomer is an ionic conductive polymer selected from an Anion Exchange ionomer (AEI), such as benzyltrimethylammonium-functionalized poly(ethylene-co-tetrafluoroethylene) (BTMA-ETFE) ionomers, polyfluorene (FLN) ionomers, Poly(terphenyl piperidinium) (PTP) ionomers, poly(biphenyl piperidinium) (PBP) ionomers, imidazolium-containing ionomers, sulphonium-based ionomers and phosphonium-based ionomers or a Cation Exchange ionomer (CEI), such as Perfluorosulfonic-acid (PFSA).

6. The method according to claim 1, wherein the solvent is an aprotic solvent or a mixture of two or more aprotic solvents; in particular polar aprotic solvents such as acetone, dimethylformamide (DMF), dimethylsulfoxide (DMSO) or N-Methyl-2-pyrrolidone (NMP), the latter being most preferred.

7. The method according to claim 1, wherein the slurry mixture of a ceramic material, a polymer binder, an ionomer and a solvent, is casted on a surface to obtain a casted composite ionic dope material with a first thickness of up to 500 µm; more particularly with a first thickness of up to about 400 µm.

8. The method according to any one of the preceding claims, wherein the slurry mixture of a ceramic material, a polymer binder, an ionomer and a solvent, comprises the ionomers in a range of about 1 wt% to about 20 wt% of the total mixture; in particular in a range of about 3 wt% to about 15 wt% of the total mixture.

9. The method according to any one of the preceding claims, wherein the slurry mixture of a ceramic material, a polymer binder, an ionomer and a solvent, comprises the ceramic material in a range of about 20 wt% to about 40 wt% of the total mixture; in particular in a range of about 23 wt% to about 35 wt% of the total mixture.

10. The method according to any one of the preceding claims, wherein the slurry mixture of a ceramic material, a polymer binder, an ionomer and a solvent, comprises the polymeric binder in a range of about 1 wt% to about 20 wt% of the total mixture; in particular in a range of about 3 wt% to about 15 wt% of the total mixture; more in particular in a range of about 5 wt% to about 15 wt% of the total mixture

11. The method according to claim 1, wherein the processing of the casted composite ionic dope material to obtain a porous composite ceramic material consists of phase inversion or phase separation.

12. The method according to any one of the preceding claims, wherein the non-solvent used in the phase inversion step, is water or a non-solvent composition of an aprotic solvent in water; in particular NMP in water, wherein the vol% ratio of water to aprotic solvent ranges from 100/0 to 10/90.

13. The method according to any one of the preceding claims, wherein the phase inversion step is performed using a coagulation bath.

14. The method according to any one of the preceding claims, wherein the phase inversion is performed by immersing the casted composite ionic dope material into a non-solvent.

15. The method according to claim 1, wherein the pressing or calendaring includes a mechanical compressing of casted porous composite ionic material with pressure up to about 760 bar, in particular with pressure ranging from 100 bar to 760 bar.

16. The method according to claim 15, wherein the pressing is performed either via hydraulic static press or via calendar rolls with off-set compressing

17. The method according to any one of the previous claims, wherein the casted porous composite ionic material is pressed to obtain a non-porous composite ion-exchange membrane with a final thickness of between and about 50 - 250 µm; in particular with a final thickness of between and about 50 - 180 µm.

18. A non-porous composite ion-exchange membrane obtained according to the method of any one of the preceding claims.

19. Use of the non-porous composite ion-exchange membrane according to claim 18, in electrochemical applications, such as a fuel-cell, battery, hydrogen peroxide production and water electrolysis.
